# EUROPEAN PATENT SPECIFICATION

(11) **EP 1 596 105 B1**
(45) Date of publication and mention of the grant of the patent: **09.04.2008**
(21) Application number: 05103811.5
(22) Date of filing: 09.05.2005
(51) Int. Cl.: F16H 61/30

(54) **Damper device for a gearbox**
Dämpfungsvorrichtung für ein Schaltgetriebe
Dispositif amortisseur pour une boîte de vitesses

(30) Priority: 13.05.2004 SE 0401239
(43) Date of publication of application: 16.11.2005
(73) Proprietor: Scania CV AB, 151 87 Södertälje (SE)
(72) Inventor: Nilsson, Hilding, 155 93 Nykvarn (SE); Slapak, Dieter, 151 47 Södertälje (SE); Tomberg, Annika, 151 48 Södertälje (SE)

(56) References cited:
- EP-B- 1 222 415
- US-A- 4 633 987
- US-A- 4 817 766
- US-A- 5 852 952

## Description

### BACKGROUND TO THE INVENTION, AND STATE OF THE ART

The invention relates to a damper device for a gearbox according to the preamble of claim 1.

Heavy vehicles often have a gearbox comprising a main gearbox which has an output shaft connected to a planetary gearbox with two gears. Thus each gear in the main gearbox can be given respective high and low gear ratios, i.e. the gearbox can be put into a high or a low speed range. To operate the planetary gearbox, a driver can move a control means to a position which indicates the gear position which the gearbox is to be put into. Such a control means may be fastened round a gear lever of the gearbox. The driver's moving the control means to a desired position results in activation of an operating cylinder controlled by compressed air which, via an operating stem, shifts a ring gear to the desired gear position. Particularly at the time when the ring gear shifts to the low gear position, a loud noise occurs when the ring gear impinges at a relatively high velocity upon a wall surface of the gearbox.

A known practice is to provide the gearbox with a hydraulic damper in order to damp the linear movement by which the operating cylinder shifts the ring gear to the two gear positions. The known hydraulic damper comprises an output stem which can be fitted together with the piston of the operating cylinder on the opposite side from the piston's connection to the operating stem. Fitting the hydraulic damper involves relatively time-consuming disassembly and fitting work. In a fitted state the hydraulic damper constitutes a substantial axial extension of the operating cylinder. The hydraulic damper thus occupies a location which in many cases needs to be utilised by other equipment of the vehicle.

US-A-5 852 952 shows a transmission operating apparatus that includes a booster unit for increasing the transmission operating force and a damper unit for suppressing rapid shift-changes caused by a change in the load due to the damper action of a hydraulic damper mechanism. The booster unit and the damper unit are arranged in a common housing.

US-A-4 817 766 shows an arrangement for damping shifting movements in transmissions. The arrangement comprises a damper arranged in parallel with a gear shifting pneumatic cylinder. Both the damper and the cylinder are mounted outside a gearbox by means of a bracket. A lever and a transverse shaft transmit movements from the pneumatic cylinder to a gear housing inside the gearbox.

### SUMMARY OF THE INVENTION

The object of the present invention is to provide a damper device which is relatively easy to fit to a gearbox while at the same time being fittable at a location where it substantially does not compete for space with other equipment.

This object is achieved with the damper device of the kind mentioned in the introduction which is characterised by the features indicated in the characterising part of claim 1. With such coupling means, which provide substantially direct linking of the motion transmitting mechanism and the operating stem, only a small amount of work is involved in connecting the motion transmitting mechanism to the operating stem. The work of fitting the hydraulic damper according to the invention can therefore be carried out very quickly and easily. The hydraulic damper thus provides, via the motion transmitting mechanism, damping of the linear movement of the gearchange means. The velocity of the gearchange means is thus slowed down during the linear movement between the gear positions. The velocity of the gearchange means as it reaches a gear position will thus be considerably lower than in an undamped state. The lower velocity of the gearchange means results in considerable reduction of the loud noise which inevitably occurs when the gearchange means reaches a gear position. Appropriate design of the motion transmitting mechanism enables the damper device to be situated at a suitable location on the gearbox where it substantially does not encroach upon spaces which would be better utilised by other equipment.

According to a preferred embodiment of the present invention, said coupling means comprise cooperating contact surfaces of the motion transmitting mechanism and the operating stem, which contact surfaces are adapted to engaging with one another when the damper device is fitted to the gearbox. Such contact surfaces are appropriately shaped to make it possible for them to be brought substantially directly into engagement with one another when the damper device is placed in an intended location on the gearbox. As the operating stem is intended to execute an axial linear movement, said contact surfaces have with advantage an extent in a plane which is substantially perpendicular to the axial direction of movement of the operating stem.

According to the invention, the motion transmitting mechanism comprises a lever arm which has a first end connected to the damper and a second end which can be linked with the operating stem by said coupling means. Such a lever arm provides easy and effective force transmission between the operating stem and the damper. With a motion transmitting mechanism in the form of a lever arm, the damper can be fitted at a position on the gearbox substantially directly externally about the operating stem. Said coupling means may comprise at the second end of the lever arm at least one protruding portion which can be coupled with a recess of the operating stem. Appropriate orientation of the protruding portion of the lever arm enables it to be inserted substantially directly into the recess of the lever arm by a substantially rectilinear fitting movement so as to achieve linking of the operating stem and the lever arm. In such cases the protruding portion may comprise contact surfaces arranged on mutually opposite sides and cooperating with correspondingly positioned contact surfaces in the recess. To and fro movements of the operating stem in both directions can thus be transmitted via the lever arm to the damper in the linked state. The damper can thus reduce the velocity of the gearchange means as the latter moves towards the first gear position and the second gear position.

According to another preferred embodiment of the present invention, the damper comprises a cylinder with a piston arranged for movement and a piston rod connected by a connection to the first end portion of the lever arm. Such a damper may be a substantially conventional hydraulic damper whereby the piston rod is connected to the lever arm by a suitable connection. The connection may involve the lever arm having at the first end at least one protruding portion insertable in a recess of the piston rod. The lever arm may thus have at the first end a connection to the damper's piston rod corresponding to its connection to the operating stem at the other end. The lever arm may comprise an articulated fastening at a portion situated between said first and second ends. The lever arm thus provides a stable pivoting movement about the articulated fastening which, with advantage, is stationary. It is possible to apply the articulated fastening at a suitable position between the ends of the lever arm so as to provide suitable force transmission between the operating stem and the damper.

According to the invention, the damper device forms part of a module which can be fitted as a unit close to an aperture in a wall of the gearbox. Such a module may comprise a housing which encloses the damper and the motion transmitting mechanism so that the damper device as a unit can be fitted to the gearbox. The other end of the lever arm protrudes from the housing so that it can be pushed into the hole and linked with the operating stem when the module is fitted to the gearbox. The module may comprise fastening means in the form of a suitable number of bolts or the like by which it is fastened to a wall of a gearbox. The result is easy and stable fitting of the damper device.

According to another preferred embodiment of the present invention, the construction of the damper is such that the gearchange means provides greater damping during the phases when it is situated close to and is moving towards the first position and/or the second position than during the other phases. It is only when the linear movement of the gearchange means stops abruptly in the first and second gear positions that a disturbing noise occurs. Too much damping of the linear movement of the gearchange means entails, however, the disadvantage that the gearchange movement will be slow. It is therefore desirable to damp the linear movement of the gearchange means substantially only during the final part of it before it reaches a gear position. The damper may accordingly be hydraulic and may comprise a reservoir for a hydraulic medium whereby the medium is adapted to flowing, via at least one first duct, between two spaces in the cylinder situated on their respective sides of the piston when the gearchange means is approaching the first position and/or the second position, and via at least one second duct which, during other phases, connects a space in the cylinder to the reservoir, whereby the first duct has a smaller cross-sectional area than the second duct so that the damper provides greater damping of the linear movement of the gearchange means during phases when the latter is approaching the first position and/the second position than during other phases. The first duct preferably has a considerably smaller cross-sectional area than the second duct so that the movement of the gearchange means is powerfully damped in the vicinity of the gear positions but is otherwise provided with substantially negligible damping.

### BRIEF DESCRIPTION OF THE DRAWINGS

A preferred embodiment of the invention is described below by way of example with reference to the attached drawings, in which:
- Fig. 1: depicts a cross-section through part of a gearbox which comprises a planetary gear with a ring gear in a first gear position,
- Fig. 2: depicts the gearbox in Fig. 1 with the ring gear in a second gear position,
- Fig. 3: depicts the damper device in Figs. 1 and 2 in more detail,
- Fig. 4: depicts a perspective view of a lever arm of the damper device and
- Fig. 5: depicts an external view of the damper device.

### DETAILED DESCRIPTION OF A PREFERRED EMBODIMENT OF THE INVENTION

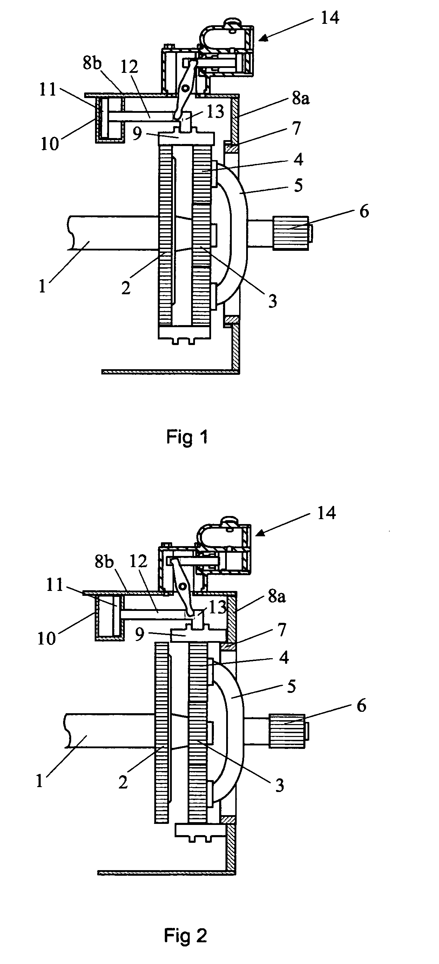

Figs. 1 and 2 depict part of a gearbox which may be used in a heavy vehicle. The gearbox comprises an undepicted main gearbox which has a number of gears. The main gearbox has an output shaft 1 connected to a planetary gear with two gear ratios. Each of the gears in the main gearbox can thus be given a high and a low gear ratio. A first clutch cone 2 provided with external teeth is mounted firmly on the output shaft 1 of the main gearbox. A sun wheel 3 with a considerably smaller diameter than the clutch cone 2 is also mounted firmly on the output shaft 1 of the main gearbox. The sun wheel 3 has external teeth in engagement with a number of toothed planet wheels 4. The planet wheels 4 are usually five in number. Figs. 1 and 2 depict two planet wheels 4. All the planet wheels 4 are supported in a planet wheel carrier 5 which is connected to an output shaft 6 from the gearbox. A second clutch cone 7 provided with external teeth is fastened stationary in a first wall portion 8a of the gearbox. A ring gear 9 provided with internal teeth is arranged for movement in an axial direction by means of an operating device in the form of a compressed air cylinder 10. The compressed air cylinder 10 comprises a movable piston 11 connected to an operating stem 12. The operating stem 12 is connected at an opposite end to a gear selector fork 13. The shape of the gear selector fork 13 is such that it extends downwards into a region between two radially protruding portions of the ring gear 9.

A driver driving a vehicle which is provided with a gearbox as above can indicate a desired high or low ratio for a gear in the main gearbox by operating a control means which may be fastened round a gear lever. When the driver moves the control means to a first position, the compressed air cylinder 10 is activated so that it shifts the ring gear 9 to a first gear position. Fig. 1 depicts the ring gear 9 in the first gear position. The ring gear 9 in the first gear position connects the first clutch cone 2 to the planet wheels 4. The motion of the output shaft 1 of the main gearbox is thus transmitted via the first clutch cone 2, the ring gear 9, the planet wheels 4 and the planet wheel carrier 5 to the gearbox output shaft 6. In this situation, all the planet wheels will rotate as a single unit so that the speed of the output shaft 1 of the main gearbox is transmitted unchanged to the output shaft 6 from the gearbox. When the driver moves the control means to a second position, the compressed air cylinder 10 is activated so that it shifts the ring gear 9 to a second gear position. Fig. 2 depicts the ring gear 9 in the second gear position. In the second gear position, the ring gear 9 connects the planet wheels 4 to the stationary second clutch cone 7. The stationary clutch cone 7 thus prevents the ring gear 9 from rotating. In this situation the speed of the output shaft 1 of the main gearbox is transmitted via the sun wheel 3, the planet wheels 4 and the planet wheel carrier 5 to the output shaft 6 from the gearbox. The output shaft 6 is thus subjected to a stepping down of the speed of the output shaft 1 of the main gearbox.

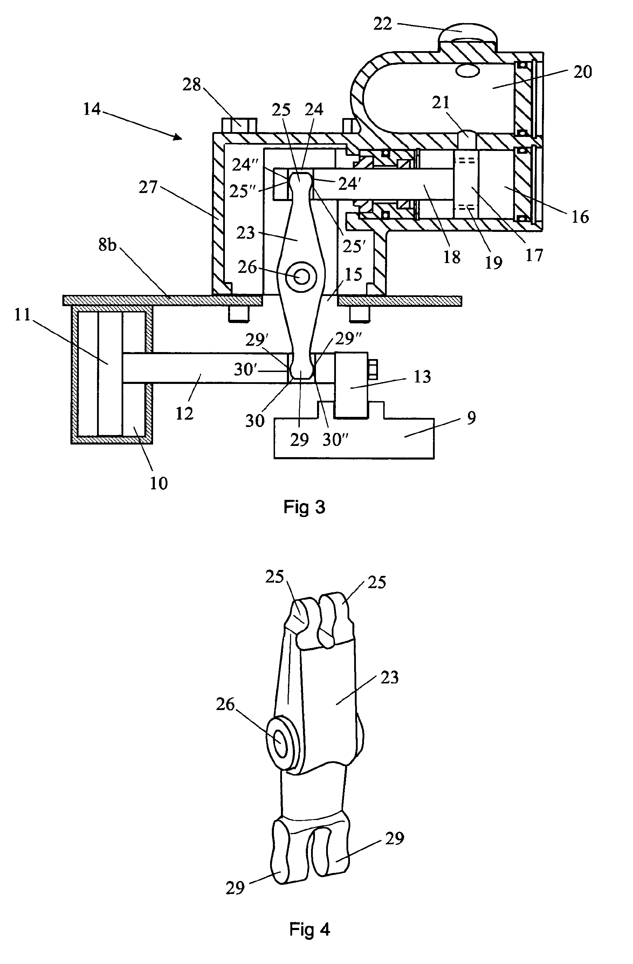

The compressed air cylinder 10 imparts a rapid and powerful motion to shift the ring gear 9 between the two gear positions. When the ring gear 9 reaches a gear position, however, the motion stops quickly and a loud noise occurs. Particularly when the ring gear 9 is being shifted to the second gear position, a loud bang occurs when the ring gear 9 impinges at a relatively high velocity upon the first wall portion 8a of the gearbox. According to the present invention, the gearbox is therefore provided with a damper device 14 which is adapted to slowing the linear movement of the ring gear 9 in the vicinity of both the first and the second gear positions. The damper device 14 is depicted in more detail in Fig. 3. The damper device 14 takes the form of a module fittable as a unit close to a hole 15 provided in a second wall portion 8b of the gearbox. In this case the damper device 14 comprises a hydraulic damper which has a cylinder 16 with a piston 17 arranged for movement and a piston rod 18. The piston 17 comprises at least one relatively narrow first duct 19 which extends through the piston 17 so that it connects the two spaces formed in the cylinder 19 on their respective sides of the piston 17. A hydraulic medium in the form of an oil is intended to fill the spaces in the cylinder 16 on their respective sides of the piston 17. A reservoir 20 for the oil is arranged above the cylinder 16. A relatively wide duct 21 connects the reservoir 20 to the cylinder 16 so that the oil can with substantially negligible resistance flow between the reservoir 20 and the cylinder 16. The reservoir 20 has a closable oil filling aperture 22.

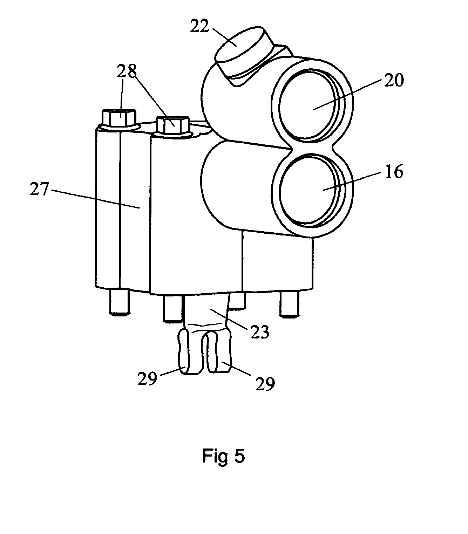

The piston rod 18 is connected, close to one end of it, to a motion transmitting mechanism in the form of a lever arm 23. The piston rod 18 comprises two recesses 24 which have a substantially vertical extent on mutually opposite sides of the piston rod 18. Fig. 3 shows the recess 24 on one side of the piston rod 18. Each of the recesses 24 comprises a first contact surface 24' and a second contact surface 24". The recesses 24 are adapted to accommodating a protruding portion 25 which protrudes from an upper end of the lever arm 23 in a linked state. The lever arm 23 comprises two substantially identical protruding portions 25 arranged at a distance from one another, see Fig. 4. The shape and orientation of the protruding portions 25 is such that by linear movement they are insertable in the piston rod's recesses 24. The protruding portions 25 comprise first contact surfaces 25' adapted to being in contact with the first contact surfaces 24' of the recesses 24 in a fitted state. The protruding portions 25 correspondingly comprise second contact surfaces 25" adapted to being in contact with the second contact surfaces 24" of the recesses 24 in a fitted state. The contact surfaces 25', 25" of the respective protruding portions 25 have a somewhat convex rounded shape so that they are also in contact with the substantially planar contact surfaces 24', 24" of the recesses even when the lever arm 23 provides rotation relative to the piston rod 18. The lever arm 23 is rotatably fastened by means of an articulation 26 in a housing 27 which, in a fitted state, encloses the components of the damper device, see Fig. 5. The damper device 14 constitutes a module which can be fitted as a unit to the gearbox. The housing 27, however, has an aperture intended to be connected to the hole 15 in the second wall portion 8b of the gearbox. The module is fastenable by means of four bolts 28 in threaded holes provided beforehand in the second wall portion 8b.

The lower end of the lever arm 23 protrudes through the aperture of the housing 27. The lever arm 23 is provided at the lower end with two protruding portions 29 arranged at a distance from one another. The operating stem 12 comprises two recesses 30 which have a substantially vertical extent on mutually opposite sides of the operating stem 12. Fig. 3 shows the recess 30 on one side of the operating stem 12. The shape and orientation of the protruding portions 29 are such that they can by linear movement be inserted in the recesses 30 of the operating stem. Each of the recesses 30 comprises a first contact surface 30' and a second contact surface 30" which have an extent substantially perpendicular to the direction of axial movement of the operating stem 12. Fitting the module to the gearbox brings each of the protruding portions 29 down into its respective recess 30. The protruding portions 29 comprise a first contact surface 29' adapted to coming into contact with the first contact surface 30' in the respective recess 30. The protruding portions 29 correspondingly comprise a second contact surface 29" adapted to coming into contact with a second contact surface 30" of the respective recesses 30 in a fitted state. The contact surfaces 29', 29" of the protruding portions 29 have a somewhat convex rounded shape so that they provide assured contact with the substantially planar contact surfaces 30', 30" of the recesses even when the lever arm 23 provides rotation relative to the operating stem 12. The protruding portions 29 also have a somewhat convex curved shape downwards so that they are easy to insert in the recesses 30 of the operating stem before the bolts 28 are screwed into the threaded holes provided in the second wall portion 8b of the gearbox. The module described above thus makes the damper device 14 very easy to fit to the gearbox. The damper device 14 may also be disassembled in a corresponding manner.

In cases where a damper device 14 need not be used, the hole 15 in the second wall portion 8b of the gearbox is closed with a blanking plate or the like fastened to the wall portion 8b by four corresponding bolts.

When a driver of a vehicle wishes to obtain a high gear ratio, the control means on the gear lever is moved to the first position. The compressed air cylinder 10 thereupon shifts the operating stem 12 to the left in Fig. 3 so that the latter, by means of the gear selector fork 13, shifts the ring gear 9 from the second gear position to the first gear position. During this gearchange movement, the lever arm 23 provides , via the force transmission between the first contact surfaces 30' of the recesses and the first contact surfaces 29' of the protruding portions, a linear movement which leads to the lever arm 23 rotating about the articulation 26. The rotary motion of the lever arm is thereafter transmitted via the first contact surfaces 25' of the protruding portions and the first contact surfaces 24' of the recesses to the piston rod 18, which moves the piston 17 to the right in the cylinder 16. During an initial phase of this linear movement, the piston 17 pushes the oil present in the space to the right of the piston out to the storage reservoir 20 via the duct 21. In this situation, since the duct 21 is relatively wide, the result is only substantially negligible damping of the linear movement of the piston 17. The damping of the linear movement of the piston 17 results in a corresponding substantially negligible damping of the linear movement of the ring gear 9. When the piston 17 has shifted to the position depicted in Fig. 3, the piston 17 covers the aperture of the duct 21 to the cylinder 16. The remainder of the oil present in the space to the right of the piston 17 can therefore no longer flow out through the duct 21 to the storage reservoir 20. During the remaining phase of the linear movement, the oil in the space to the right of the piston 17 is therefore pushed through the narrow ducts 19 in the piston 17. Considerable damping of the linear movement of the piston 17 is thus provided, resulting in corresponding damping of the linear movement of the ring gear 9. The movement of the ring gear 9 as it approaches the first gear position will therefore be slowed down so that it has a relatively low velocity when it reaches the first gear position. The ring gear 9 will thus not come to such an abrupt stop as it would when reaching undamped the first gear position. The occurrence of a loud noise when the ring gear 9 reaches the first gear position can thus be substantially eliminated.

When a driver thereafter wishes to obtain a low gear ratio, the control means on the gear lever is moved to the second position. The compressed air cylinder 10 thereupon shifts the operating stem 12 to the right in Fig. 3 so that the latter, via the gear selector fork 13, shifts the ring gear 9 from the first gear position to the second gear position. During this gearchange movement, the lever arm 23 is rotated about the articulation 26 by the force transmitted between the second contact surfaces 30" of the recesses and the second contact surfaces 29" of the protruding portions. The lever arm 23 thus, via the piston rod 18, shifts the piston 17 to the left in the cylinder 16. During an initial phase of this linear movement, the piston 17 pushes the oil present in the space to the left of the piston 17 out via the duct 21 to the storage reservoir 20. In this situation there is only substantially negligible damping of the linear movement of the piston 17, resulting in corresponding substantially negligible damping of the linear movement of the ring gear 9. When the piston 17 has shifted to the position depicted in Fig. 3, the piston 17 covers the aperture of the duct 21 to the cylinder 16. The remainder of the oil in the space to the left of the piston 17 can therefore no longer flow out through the duct 21 to the storage reservoir 20. During the remaining phase of the linear movement, the oil in the space to the left of the piston 17 is therefore forced through the narrow ducts 19 in the piston 17. The result is a relatively large damping of the linear movement of the piston 17. The damping of the linear movement of the piston 17 results in corresponding damping of the linear movement of the ring gear 9. The linear movement of the ring gear 9 is thus slowed down so that the latter is at a relatively low velocity when it reaches the second gear position. A lower velocity means that the ring gear 9 will not stop as abruptly when reaching the second gear position and impinging upon the first wall portion 8a of the gearbox. With a damper device 14 as above, the loud noise which occurs when the ring gear 9 reaches the second gear position can be substantially completely eliminated.

The invention is in no way limited to the embodiment described but may be varied freely within the scopes of the claims. For example, the gearchange means need not necessarily be a ring gear 9 but may be of some other configuration. The operating device need not be a cylinder 10 controlled by compressed air but may be substantially any desired hydraulic or electric operating device. The damper need not be a hydraulic damper. The damper device need not be fastened to the gearbox by bolts, as any desired fastening means may be used. The lever arm may be provided with any desired number of protruding portions capable of being connected releasably to correspondingly oriented recesses in the operating stem. The motion transmitting mechanism need not be a lever arm but may be of substantially any desired but functional kind.

## Claims

1. A damper device for a gearbox, whereby the gearbox comprises a gearchange means (9) arranged for movement between at least one first gear position and one second gear position by means of an operating stem (12) which is movable to and fro axially by activation of an operating device (10), and whereby the damper device (14) comprises a damper (16 - 22), a motion transmitting mechanism (23) connected to the damper (16-22), fastening means (28) for fitting the damper device to the gearbox, **characterised in that** the damper device (14) comprises coupling means (29, 30) which provide substantially direct linking of the motion transmitting mechanism (23) and the operating stem (12) when the damper device (14) is fitted to the gearbox, wherein the damper device (14) is comprised within a module which can be fitted as a unit close to an aperture (15) in a housing (8) of the gearbox, wherein the motion transmitting mechanism comprises a lever arm (23) which has a first end connected to the damper (16 - 22) and a second end which can be linked with the operating stem (12) by said coupling means (29, 30) and wherein the second end of the lever arm (23) protrudes from the module so that it can be pushed into the aperture (15) and linked with the operating stem (12) when the module is fitted to the gearbox.

2. A damper device according to claim 1, **characterised in that** said coupling means comprise cooperating contact surfaces (29', 29", 30', 30") of the motion transmitting mechanism (23) and the operating stem (12), which contact surfaces (29', 29", 30', 30") are adapted to entering into engagement with one another when the damper device (14) is fitted to the gearbox.

3. A damper device according to claim 1 or 2, **characterised in that** said coupling means comprise, at the second end of the lever arm (23), at least one protruding portion (29) capable of being linked with a recess (30) of the operating stem (12).

4. A damper device according to to any one of the foregoing claims, **characterised in that** the damper comprises a cylinder (16) with a piston (17) arranged for movement and a piston rod (18) which is connected by a connection (24, 25) to the first end portion of the lever arm (23).

5. A damper device according to claim 4, **characterised in that** said connection comprises the lever arm (23) having at the first end at least one protruding portion (25) insertable in a recess (24) of the piston rod (18).

6. A damper device according to any one of the foregoing claims, **characterised in that** the lever arm (23) comprises an articulated fastening (26) at a portion situated between said first and second ends.

7. A damper device according to any one of the foregoing claims, **characterised in that** the construction of the damper (16 - 22) is such that the gearchange means (9) provides greater damping of movement during the phase when the latter approaches the first and/or the second gear position than during other phases.

8. A damper device according to claims 4 and 7, **characterised in that** the damper is hydraulic and comprises a reservoir (20) for a hydraulic medium, whereby the medium is adapted to flowing, via at least one first duct (19), between two spaces in the cylinder (16) when the gearchange means is approaching the first and/or second gear position, and via at least one second duct (21) between the cylinder (16) and the reservoir (20) during other phases, the first duct (19) having a smaller cross-sectional area than the second duct (21) so that the damper provides greater damping of the linear movement of the gearchange means (9) during phases when the latter approaches the first position and/or the second position than during other phases.

## Patentansprüche

1. Dämpfervorrichtung für ein Getriebe, wobei das Getriebe ein Gangwechselmittel (9) aufweist, das zur Bewegung zwischen wenigstens einer ersten Gangposition und wenigstens einer zweiten Gangposition mittels eines Betätigungsstößels (12) angeordnet ist, der durch Betätigung einer Betätigungsvorrichtung (10) axial vor und zurück bewegbar ist, und wobei die Dämpfervorrichtung (14) einen Dämpfer (16-22), einen Bewegungsübertragungsmechanismus (23), der mit dem Dämpfer (16-22) verbunden ist, und Befestigungsmittel (28) zum Anbringen der Dämpfervorrichtung an dem Getriebe umfasst,
**dadurch gekennzeichnet, dass** die Dämpfervorrichtung (14) Kopplungsmittel (29, 30) umfasst, die eine im Wesentliche direkte Verbindung des Bewegungsübertragungsmechanismus (23) und des Betätigungsstößels (12) vorsehen, wenn die Dämpfervorrichtung (14) an dem Getriebe angebracht ist, wobei die Dämpfervorrichtung (14) innerhalb eines Moduls vorgesehen ist, das als eine Einheit nahe einer Öffnung (15) in einem Gehäuse (8) des Getriebes anbringbar ist, wobei der Bewegungsübertragungsmechanismus einen Hebelarm (23) umfasst, dessen erstes Ende mit dem Dämpfer (16-22) verbunden ist, und dessen zweites Ende mit dem Betätigungsstößel (12) durch die Kupplungsmittel (29, 30) verbindbar ist, und wobei das zweite Ende des Hebelarms (23) von dem Modul aus vorsteht, so dass es in die Öffnung (15) hineingeschoben und mit dem Betätigungsstößel (12) verbunden werden kann, wenn das Modul an das Getriebe angebracht wird.

2. Dämpfervorrichtung nach Anspruch 1,
**dadurch gekennzeichnet, dass** die Kupplungsmittel zusammenwirkende Kontaktflächen (29', 29", 30', 30") des Bewegungsübertragungsmechanismus (23) und den Betätigungsstößels (12) umfassen, wobei die Kontaktflächen (29', 29", 30', 30") dazu ausgelegt sind, in Eingriff miteinander zu gelangen, wenn die Dämpfervorrichtung (14) an das Getriebe angebracht wird.

3. Dämpfervorrichtung nach Anspruch 1 oder 2,
**dadurch gekennzeichnet, dass** die Kupplungsmittel an dem zweiten Ende des Hebelarms (23) wenigstens einen vorspringenden Abschnitt (29) umfassen, der dazu ausgelegt ist, mit einer Ausnehmung (30) des Betätigungsstößels (12) verbunden zu werden.

4. Dämpfervorrichtung nach einem der vorangehenden Ansprüche,
**dadurch gekennzeichnet, dass** der Dämpfer einen Zylinder (16) mit einem zur Bewegung angeordneten Kolben (17) und eine Kolbenstange (18) umfasst, die über eine Verbindung (24, 25) mit dem ersten Endabschnitt des Hebelarms (23) verbunden ist.

5. Dämpfervorrichtung nach Anspruch 4,
**dadurch gekennzeichnet, dass** die Verbindung umfasst, dass der Hebelarm (23) an dem ersten Ende wenigstens einen vorspringenden Abschnitt (25) aufweist, der in eine Ausnehmung (24) der Kolbenstange (18) einsetzbar ist.

6. Dämpfervorrichtung nach einem der vorangehenden Ansprüche,
**dadurch gekennzeichnet, dass** der Hebelarm (23) eine gelenkige Befestigung (26) an einem Abschnitt aufweist, der zwischen den ersten und zweiten Enden angeordnet ist.

7. Dämpfervorrichtung nach einem der vorangehenden Ansprüche,
**dadurch gekennzeichnet, dass** der Aufbau des Dämpfers (16-22) derart gewählt ist, dass das Gangwechselmittel (9) eine größere Dämpfung bei einer Bewegung während der Phase vorsieht, wenn letztere die erste und/oder die zweite Gangposition erreicht, als während anderen Phasen.

8. Dämpfervorrichtung nach Anspruch 4 und 7,
**dadurch gekennzeichnet, dass** der Dämpfer hydraulisch ausgebildet ist und ein Reservoir (20) für ein Hydraulikmedium aufweist, wobei das Medium dazu ausgelegt ist, über wenigstens eine erste Leitung (19) zwischen zwei Räumen in den Zylinder (16) zu fließen, wenn das Gangwechselmittel sich der ersten und/oder zweiten Gangposition nähert, und über wenigstens eine zweite Leitung (21) zwischen dem Zylinder (16) und dem Reservoir (20) während anderer Phasen zu fließen, wobei die erste Leitung (19) eine kleinere Querschnittsfläche als die zweite Leitung (21) aufweist, so dass der Dämpfer eine größere Dämpfung der linearen Bewegung des Gangwechselmittels (9) während Phasen vorsieht, wenn letzteres sich der ersten Position und/oder der zweiten Position nähert, als während anderer Phasen.

## Revendications

1. Dispositif amortisseur pour une boîte de vitesses, la boîte de vitesses comprenant un moyen de changement de vitesses (9) configuré pour imprimer un mouvement entre au moins une première position de rapport de vitesse et une seconde position de rapport de vitesse au moyen d'une tige de commande (12) déplaçable axialement selon un mouvement de va-et-vient par activation d'un dispositif d'actionnement (10), et le dispositif amortisseur (14) comprenant un amortisseur (16-22), un mécanisme de transmission du mouvement (23) relié à l'amortisseur (16-22), des moyens de fixation (28) pour fixer le dispositif amortisseur à la boîte de vitesses, **caractérisé en ce que** le dispositif amortisseur (14) comprend des moyens d'accouplement (29, 30) qui assurent une liaison sensiblement directe du mécanisme de transmission du mouvement (23) et de la tige de commande (12) lorsque le dispositif amortisseur (14) est fixé à la boîte de vitesses, le dispositif amortisseur (14) étant contenu dans un module pouvant être fixé en tant qu'ensemble à proximité d'une ouverture (15) ménagée dans un carter (8) de la boîte de vitesses, le mécanisme de transmission du mouvement comprenant un bras de levier (23) dont une première extrémité est reliée à l'amortisseur (16-22) et une seconde extrémité peut être reliée à la tige de commande (12) par ledit moyen d'accouplement (29, 30) et la seconde extrémité du bras de levier (23) faisant saillie du module de façon à pouvoir être poussée dans l'ouverture (15) et reliée à la tige de commande (12) lorsque le module est fixé à la boîte de vitesses.

2. Dispositif amortisseur selon la revendication 1, **caractérisé en ce que** ledit moyen d'accouplement comprend des surfaces de contact coopérantes (29', 29", 30', 30") du mécanisme de transmission du mouvement (23) et de la tige de commande (12), lesquelles surfaces de contact (29', 29", 30', 30") sont conçues pour venir en prise l'une avec l'autre lorsque le dispositif amortisseur (14) est fixé à la boîte de vitesse.

3. Dispositif amortisseur selon la revendication 1 ou 2, **caractérisé en ce que** ledit moyen d'accouplement comprend, à la seconde extrémité du bras de levier (23), au moins une partie en saillie (29) apte à être reliée à un évidement (30) de la tige de commande (12).

4. Dispositif amortisseur selon l'une quelconque des revendications précédentes, **caractérisé en ce que** l'amortisseur comprend un vérin (16) équipé d'un piston (17) agencé pour se déplacer et une tige de piston (18) reliée par une liaison (24, 25) à la première partie d'extrémité du bras de levier (23).

5. Dispositif amortisseur selon la revendication 4, **caractérisé en ce que** ladite liaison comprend le bras de levier (23) comportant, à la première extrémité, au moins une partie en saillie (25) apte à être insérée dans un évidement (24) de la tige de piston (18).

6. Dispositif amortisseur selon l'une quelconque des revendications précédentes, **caractérisé en ce que** le bras de levier (23) comprend une fixation articulée (26) au niveau d'une partie située entre les première et seconde extrémités.

7. Dispositif amortisseur selon l'une quelconque des revendications précédentes, **caractérisé en ce que** la construction de l'amortisseur (16 - 22) est telle que le moyen de changement de vitesses (9) assure un amortissement du mouvement plus important pendant la phase durant laquelle ce dernier s'approche de la première et/ou de la seconde position de rapport de vitesses que pendant d'autres phases.

8. Dispositif amortisseur selon les revendications 4 et 7, **caractérisé en ce que** l'amortisseur est hydraulique et comprend un réservoir (20) destiné à recevoir un fluide hydraulique, le fluide étant destiné à s'écouler, via au moins un premier conduit (19), entre deux espaces dans le vérin (16) lorsque le moyen de changement de vitesses s'approche de la première et/ou de la seconde position de rapport de vitesses, et via au moins un second conduit (21) entre le vérin (16) et le réservoir (20) pendant d'autres phases, le premier conduit (19) présentant une aire de section transversale plus petite que le second conduit (21) de sorte que l'amortisseur assure un amortissement du mouvement linéaire du moyen de changement de vitesses (9) plus important pendant des phases durant lesquelles ce dernier s'approche de la première position et/ou de la seconde position que pendant d'autres phases.
